# EUROPEAN PATENT APPLICATION

(11) **EP 4 773 409 A1**
(43) Date of publication of application: **08.07.2026**
(21) Application number: 25846612.7
(22) Date of filing: 13.06.2025
(51) Int. Cl.: H01M 50/533, H01M 50/536

(54) **TAB STRUCTURE AND WELDING TOOL**

(30) Priority: 02.08.2024 CN 202421871584 U
(71) Applicant: HUIZHOU EVE POWER CO., LTD, Huizhou, Guangdong 516039 (CN); Eve Power Co., Ltd., Jingmen, Hubei 448000 (CN)
(72) Inventor: WANG, Chengyun, Guangdong 516039 (CN); XIAO, Daiyong, Guangdong 516039 (CN); LUO, Zhanpeng, Guangdong 516039 (CN); CHEN, Rui, Guangdong 516039 (CN); DUAN, Dong, Guangdong 516039 (CN)
(74) Representative: Zhu, Puxing
(86) International application number: PCT/CN2025/100876
(87) International publication number: WO 2026/026265

(57) **Abstract**

The present application provides an electrode tab structure and a welding tooling. The electrode tab structure includes multiple electrode tab units stacked and pre-welded together, and the electrode tab structure includes a first end face and a second end face arranged opposite to each other. The first end face of the electrode tab structure is configured to be abutted against a welding head, and the second end face of the electrode tab structure is configured to be abutted against a welding platform. A difference between a highest point and a lowest point of a metallographic section of the first end face in a first direction being H1, a difference between a highest point and a lowest point of a metallographic section of the second end face in the first direction being H2, and H1 ≤ H2.

## Description

The present Application claims priority to Chinese Patent Application No. 202421871584.5, filed to China National Intellectual Property Administration on August 2, 2024, the content of which is incorporated herein by reference in its entirety.

### TECHNICAL FIELD

The present application relates to the field of electrode tab structure technology, and in particular to an electrode tab structure and a welding tooling.

### BACKGROUND

In production and manufacturing processes of batteries, the welding of multi-layer electrode tabs is an important process in the manufacturing process of batteries, and the welding process of multi-layer electrode tabs is particularly important. In the traditional welding process, the multi-layer electrode tabs are first pre-welded through ultrasonic welding.

### SUMMARY

However, during a pre-welding process, a welding head of the ultrasonic welding is of a sharp-tooth structure, which will damage a surface of a welded electrode tab structure, resulting in poor flatness of the surface of the electrode tab structure, which is adverse to the subsequent welding of the electrode tab with other components and cannot meet the requirements for the welding of the electrode tab.

The present application provides an electrode tab structure. The electrode tab structure includes multiple electrode tab units stacked and pre-welded together, the electrode tab structure includes a first end face and a second end face arranged opposite to each other. A difference between a highest point and a lowest point of a metallographic section of the first end face in a first direction is H1, a difference between a highest point and a lowest point of a metallographic section of the second end face in the first direction is H2, and H1 ≤ H2.

The present application further provides a welding tooling. The welding tooling is configured to stack and weld multiple electrode tab units into the electrode tab structure as described above. A first end face of the electrode tab structure is configured to be abutted against a welding head, and a second end face of the electrode tab structure is configured to be abutted against a welding platform.

### BENEFICIAL EFFECTS

In the electrode tab structure provided in the present application, by configuring the difference H1 between the highest point and the lowest point of the metallographic section of the first end face in the first direction less than or equal to the difference H2 between the highest point and the lowest point of the metallographic section of the second end face in the first direction, the flatness of the first end face of the electrode tab structure is guaranteed, so as to meet the requirements for subsequent welding of the electrode tab structure with other components.

In the welding tooling provided in the present application, the first end face of the electrode tab structure is connected to the welding head, and the second end face of the electrode tab structure is connected to the welding platform. After the welding is completed, due to the good flatness of the welding platform and the fact that the difference between the highest point and the lowest point of the metallographic section of the first end face in the first direction is smaller than the difference between the highest point and the lowest point of the metallographic section of the second end face in the first direction, the flatness of the first end face of the electrode tab structure is guaranteed as much as possible, which is beneficial to the welding of the electrode tab structure with other components, so as to meet the requirements for the welding of the electrode tab.

### BRIEF DESCRIPTION OF THE DRAWINGS

FIG. 1 is a schematic diagram of a metallographic section of a structure of an electrode tab structure provided in an embodiment of the present application;
FIG. 2 is a three-dimensional schematic diagram of a structure of a welding tooling provided in an embodiment of the present application;
FIG. 3 is a top schematic diagram of a structure of a welding tooling provided in an embodiment of the present application;
FIG. 4 is a side schematic diagram of a structure of an electrode tab structure provided in an embodiment of the present application; and
FIG. 5 is an enlarged schematic diagram of part A in FIG. 4.

### Reference numerals in the accompany drawings:

1: electrode tab structure; 11: first end face; 12: second end face;
20: welding head; 21: welding teeth;
X: first direction.

### DETAILED DESCRIPTION

In the description of the present application, unless otherwise clearly specified and limited, the terms "connected to", "connected", and "fixed" should be understood in a broad sense, for example, it can be a fixed connection, a detachable connection, or an integral connection; it can be a mechanical connection or an electrical connection; it can be a direct connection or an indirect connection through an intermediate medium; and it can be an internal connection of two elements or an interaction relationship between two elements. For ordinary technicians in this field, the specific meanings of the above terms in the present application can be understood according to the specific circumstances.

In the present application, unless otherwise clearly specified and limited, a first feature being "on" or "under" a second feature may include the first and second features being in direct contact, or may include the first and second features being in contact not directly but through another feature between them. Moreover, a first feature being "on", "up of" and "above" a second feature includes the first feature being directly above and obliquely above the second feature, and the first feature having a higher horizontal height than the second feature. A first feature being "under", "down of" and "below" a second feature includes the first feature being directly below and obliquely below the second feature, and the first feature having a lower horizontal height than the second feature.

In the description of this embodiment, the terms "upper", "lower", "left", "right", "front", "rear" and other directions or positional relationships are based on the directions or positional relationships shown in the accompanying drawings, and are for the convenience of description and simplification of operation, rather than indicating or implying that the device or element referred to must have a specific direction, be constructed and operate in a specific direction, and therefore cannot be understood as limiting the present application. In addition, the terms "first" and "second" are used to distinguish in the description and have no special meaning.

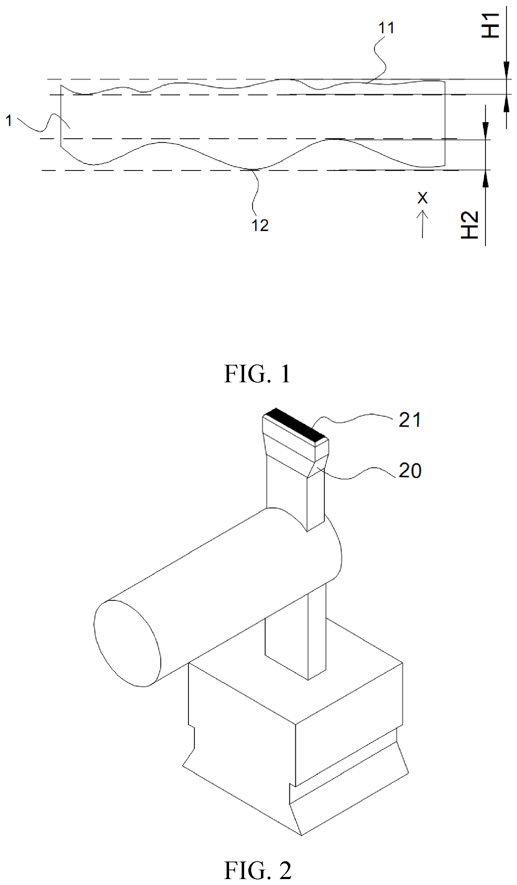

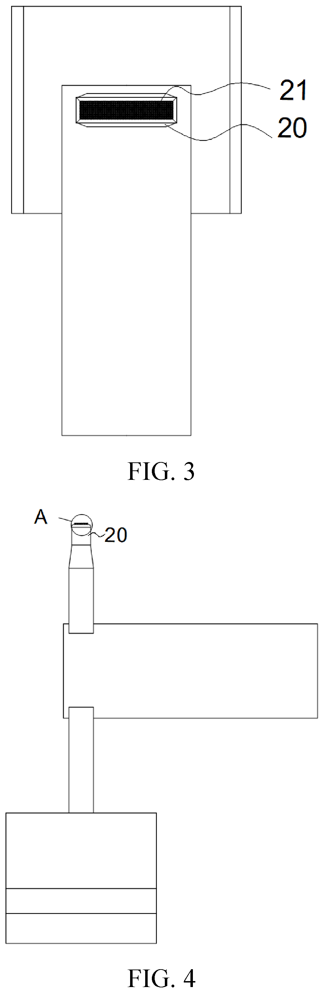

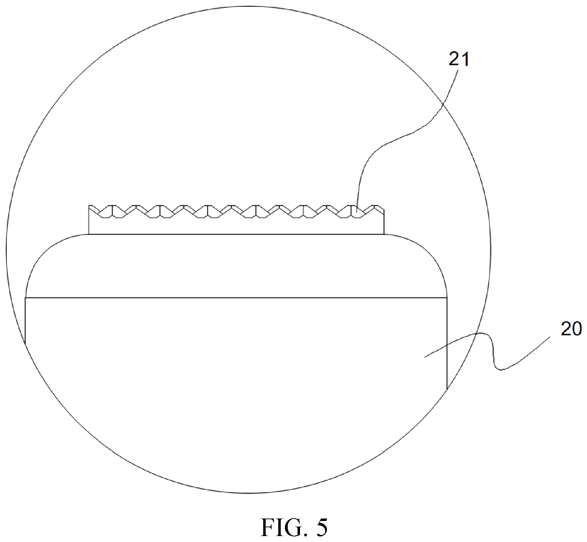

As shown in FIG. 1 to FIG. 5, in the first aspect, embodiments of the present application provide an electrode tab structure 1. The electrode tab structure 1 is formed by multiple electrode tab units stacked and pre-welded together. The electrode tab structure 1 includes a first end face 11 and a second end face 12 arranged opposite to each other, the first end face 11 is configured to be connected to a welding head 20, and the second end face 12 is configured to be connected to a welding platform. A difference between a highest point and a lowest point of a metallographic section of the first end face 11 in a first direction is H1, a difference between a highest point and a lowest point of a metallographic section of the second end face 12 in the first direction is H2, and H1 ≤ H2.

In a case that H1 > H2, the difference between the highest point and the lowest point of the metallographic section of the first end face 11 in the first direction is greater than the difference between the highest point and the lowest point of the metallographic section of the second end face 12 in the first direction. In this case, the flatness of the first end face 11 cannot be guaranteed, and the requirements for subsequent welding of the electrode tab structure 1 with other components cannot be met. In the present application, the subsequent welding includes a final welding, which refers to the direct welding of the electrode tab structure to an electrode terminal.

Further, the final welding is specifically laser welding. In laser welding, appropriate materials need to be selected so that the number of electrons at a high (sub) energy level is more than the number of electrons at a low energy level, that is, to form population inversion, so that the number of the stimulated emission electrons is more than the number of the absorption electrons, thereby generating a laser light. After being stimulated to a high energy level, the electrons need to stay at the high energy level long enough to form a powerful laser energy. Meanwhile, the operating temperature of precision laser welding processing equipment needs to be kept within a certain range to ensure the stability and service life of the equipment. Furthermore, in order to avoid thermal deformation of the electrode tab structure 1, which affects the welding quality, the indoor temperature also needs to be kept constant. Excessive humidity will cause condensation inside the equipment, affecting the normal operation of the equipment. Therefore, the relative humidity needs to be controlled at a low level. In addition, during the laser welding process, impurities such as dust and smoke will affect the propagating and focusing of the beam, thereby affecting the welding quality. Therefore, a workplace should be dusted and cleaned regularly to keep it clean. Meanwhile, windows should be closed or dust-proof curtains should be installed to prevent external dust from entering. In addition, laser welding equipment is sensitive to vibration, so that good anti-vibration measures need to be taken in the workplace to ensure the stability and accuracy of the welding process.

In addition, control of air pressure in laser welding is also very important. Air pressure is a key parameter in laser welding, which affects multiple factors during the welding process, such as weld quality, molten pool morphology, pore formation, and welding speed. A control standard for air pressure needs to be determined based on the specific welding material and thickness, and is generally controlled within a range of 0.1 MPa - 1 MPa.

In the present application, a flatness of a surface of the electrode tab structure 1 is good, so it is friendly to the laser beam, and the phenomenon of burning through the electrode tab with laser reflection due to excessive large gaps between the electrode tab units will be avoided, thus ensuring the stability during the final welding.

In the technical solution of the present application, the first end face 11 of the electrode tab structure 1 is connected to the welding head 20, and the second end face 12 of the electrode tab structure 1 is connected to the welding platform. After the welding is completed, due to the high flatness of the welding platform, through analysis and comparison of metallographic sections, the difference between the highest point and the lowest point of the metallographic section of the first end face 11 in the first direction is made smaller than the difference between the highest point and the lowest point of the metallographic section of the second end face 12 in the first direction. As such, the flatness of the first end face 11 of the electrode tab structure 1 can be guaranteed as much as possible, which is beneficial to the welding of the electrode tab structure with other components, so as to meet the requirements for the welding of the electrode tab.

In an embodiment, H1 ≤ 0.11 mm. In a case that H1 > 0.11 mm, the difference between the highest point and the lowest point of the metallographic section of the first end face 11 in the first direction is excessive large, resulting in a poor flatness of the first end face 11, so that the phenomenon of burning through the electrode tab with laser reflection due to excessive large gaps between the electrode tab units during the subsequent welding process will be avoided, thus the stability during the final welding cannot be improved. Therefore, the setting of 0 ≤ H1 ≤ 0.11 mm not only ensures the good flatness of the first end face 11, but also avoids the phenomenon of burning through the electrode tab with laser reflection due to excessive large gaps between the electrode tab units during the subsequent welding process, so that the stability during the final welding can be improved. Optionally, H1 can be set to a value such as 0.05 mm, 0.08 mm, or 0.11 mm. The specific setting should be selected based on the use environment of the electrode tab structure 1, which is not specifically limited hereto.

In an embodiment, 0.05 mm ≤ H2 ≤ 0.3 mm. In a case that H2 > 0.3 mm, the difference between the highest point and the lowest point of the metallographic section of the second end face 12 in the first direction is excessive large, so that when the electrode tab structure 1 is in contact with the welding platform, the welding platform will damage a structure of the second end face 12 of the electrode tab structure 1, thereby affecting the flatness of the second end face 12 of the electrode tab structure 1, making it inconvenient for subsequently welding with other components. In a case that H2 < 0.05 mm, the difference between the highest point and the lowest point of the metallographic section of the second end face 12 in the first direction is excessive small, so that a good flatness of the welding platform is needed, thereby increasing the welding cost, which is adverse to realizing the mass production of the electrode tab structure 1. Therefore, the setting of 0.05 mm ≤ H2 ≤ 0.3 mm not only ensures, when the electrode tab structure 1 is in contact with the welding platform, the welding platform will not damage the structure of the second end face 12 of the electrode tab structure 1, thereby preventing the flatness of the second end face 12 of the electrode tab structure 1 from being affected, so that the subsequent welding with other components is facilitated, but also does not increase welding costs, which is conducive to realizing the mass production of the electrode tab structure 1. Optionally, H2 can be set to a value such as 0.05 mm, 0.08 mm, or 0.3 mm, and the specific setting should be selected based on the use environment of the valve body 10, which is not specifically limited hereto.

In one embodiment, the electrode tab structure 1 includes multiple electrode tab units stacked in a first direction, a side face, away from a lowest electrode tab unit, of a highest electrode tab unit is formed as the first end face 11, and a side face, away from the highest electrode tab unit, of the lowest electrode tab unit is formed as the second end face 12. With this arrangement, the requirements for stacking and connecting multiple electrode tab units can be met, thereby reducing an overall volume of the multiple electrode tab units, so as to achieve the miniaturization of the electrode tab structure 1.

In the second aspect, embodiments of the present application provide a welding tool, which is configured to stack and weld multiple electrode tab units into the electrode tab structure 1 as described above. The first end face 11 of the electrode tab structure 1 is configured to be abutted against the welding head 20, and the second end face 12 of the electrode tab structure 1 is configured to be abutted against the welding platform.

In an embodiment, the welding tooling includes: a welding head 20 with welding teeth 21, in which the welding teeth 21 are configured to be connected to the first end face 11 of the electrode tab structure 1; and a welding platform (not shown in the drawings of the present application), configured to be connected to the second end face 12 of the electrode tab structure 1. The welding teeth 21 are of a flat tooth structure, a surface roughness of the welding teeth 21 is Sa, and 10 µm ≤ Sa ≤ 85 µm. In a case that Sa > 85 µm, the surface roughness of the welding teeth 21 is excessive large. Due to the excessive large surface roughness, an effective contact area between the welding head 20 and a workpiece to be welded will be reduced, resulting in an increase in a pressure at a contact point, thereby accelerating the wear of the workpiece to be welded, which is because microscopic protrusions on a rough surface are more likely to cause stress concentration during friction, resulting in an increase of the wear. In a case that Sa < 10 µm, the surface roughness is excessive small, the high requirements for processing equipment and processes are needed, and precise machine tools, cutting tools, and processing parameters are needed, which will increase processing costs and processing time. Therefore, the setting of 10 µm ≤ Sa ≤ 85 µm not only increases the effective contact area between the welding head 20 and the workpiece to be welded, but also reduces the pressure at the contact point, so that the wear of the workpiece to be welded will not be accelerated, and the high requirements for the processing equipment and processes are not needed, thus not increasing the processing cost and processing time. Optionally, Sa can be set to a value such as 10 µm, 50 µm, or 85 µm, and the specific setting should be selected based on the use environment of the welding teeth 21, which is not specifically limited hereto.

In an embodiment, a height of the welding teeth 21 in the first direction is H3, and H3 ≤ 100 µm. In a case that H3 > 100 µm, the height of the welding teeth 21 in the first direction is excessive large, which will increase the production cost of the welding teeth 21. Therefore, the setting of H3 ≤ 100 µm cannot reduce the processing cost of the welding teeth 21. Optionally, H3 can be set to a value such as 50 µm, 80 µm, or 100 µm, and the specific setting should be selected based on the use environment of the welding teeth 21, which is not specifically limited hereto.

In the present application, the welding teeth 21 are processed by chemical etching or electric discharge treatment.

In an embodiment, an area of the welding head 20 is S1, and an area of the welding teeth 21 is S2, where 60 % ≤ S2 : S1 ≤ 90 %. In a case that S2 : S1 > 90 %, a ratio of the area of the welding head 20 to the area of the welding teeth 21 is excessive large, which means that the area of the welding teeth 21 is excessive large. Since the area of the welding head 20 is of a constant value, and a blank holder is arranged around the welding teeth 21, an area of the blank holder will be reduced, and a contact area between the blank holder and an non-welding area of the electrode tab structure 1 will be reduced, thus the effective compression of the blank holder on the non-welding area of the electrode tab cannot be ensured. In a case that S2 : S1 < 60 %, the ratio of the area of the welding head 20 to the area of the welding teeth 21 is excessive large, which means that the area of the welding teeth 21 is excessive small. Since the area of the welding head 20 is of a constant value, the area of the welding teeth 21 is reduced, thereby reducing the welding efficiency. Therefore, the setting of 60 % ≤ S2 : S1 ≤ 90 % not only helps to ensure the effective compression of the blank holder on the non-welding area of the electrode tab structure 1, but also can ensure the area of the welding teeth 21, thereby increasing the welding efficiency. Optionally, S2 : S1 can be set to a value such as 60%, 80%, or 90%, and the specific setting should be selected based on the use environment of the ultrasonic welding head 20, which is not specifically limited hereto.

In an embodiment, 15 mm² ≤ S2 ≤ 600 mm². In a case that S2 > 600 mm², the area of the welding teeth 21 is excessive large. Since the area of the welding head 20 is of a constant value, and a blank holder is arranged around the welding teeth 21, an area of the blank holder will be reduced, and a contact area between the blank holder and an non-welding area of the electrode tab structure 1 will be reduced, thus the effective compression of the blank holder on the non-welding area of the electrode tab cannot be ensured. In a case that S2 < 15 mm², the area of the welding teeth 21 is excessive small. Since the area of the welding head 20 is of a constant value, the area of the welding teeth 21 is reduced, thereby reducing the welding efficiency. Therefore, the setting of 15 mm² ≤ S2 ≤ 600 mm² not only helps to ensure the effective compression of the blank holder on the non-welding area of the electrode tab structure 1, but also ensures the area of the welding teeth 21, thereby increasing the welding efficiency. Optionally, S2 can be set to a value such as 15 mm², 100 mm², or 600 mm², and the specific setting should be selected according to the use environment of the first edge pressing sub-portion 31, which is not specifically limited hereto.

In an embodiment, 24 mm² ≤ S1 ≤ 780 mm². In a case that S1 > 780 mm², the area of the welding head 20 is excessive large, so that it is inconvenient for the precise alignment between the welding head 20 and the workpiece to be welded, thereby reducing the welding efficiency, and meanwhile increasing the production cost of the welding head 20, which is adverse to the mass production of the welding head 20. In a case that S1 < 24 mm², the area of the welding head 20 is excessive small, so that the requirements for the welding of large workpieces to be welded cannot be met. Therefore, the setting of 24 mm² ≤ S1 ≤ 780 mm² not only facilitates the precise alignment between the welding head 20 and the workpiece to be welded, thereby increasing the welding efficiency, but also does not increase the production cost of the welding head 20, so that it is conducive to the mass production of the welding head 20, and the requirements for the welding of large workpieces to be welded can also be met. Optionally, S1 can be set to a value such as 24 mm², 200 mm², or 780 mm², and the specific setting should be selected based on the use environment of the welding head 20, which is not specifically limited hereto.

In the technical solution of the present application, the first end face 11 of the electrode tab structure 1 is connected to the welding head 20, and the second end face 12 of the electrode tab structure 1 is connected to the welding platform. Due to the high flatness of the welding platform, after the welding is completed, through analysis and comparison of metallographic sections, the difference between the highest point and the lowest point of the metallographic section of the first end face 11 in the first direction is made smaller than the difference between the highest point and the lowest point of the metallographic section of the second end face 12 in the first direction. As such, the flatness of the first end face 11 of the electrode tab structure 1 can be guaranteed as much as possible, which is beneficial to the welding of the electrode tab structure with other components, so as to meet the requirements for the welding of the electrode tab.

## Claims

1. An electrode tab structure, the electrode tab structure comprising a plurality of electrode tab units stacked and pre-welded together; the electrode tab structure comprising a first end face and a second end face arranged opposite to each other; a difference between a highest point and a lowest point of a metallographic section of the first end face in a first direction being H1, a difference between a highest point and a lowest point of a metallographic section of the second end face in the first direction being H2, and H1 ≤ H2.

2. The electrode tab structure of claim 1, wherein H1 ≤ 0.11 mm.

3. The electrode tab structure of claim 1, wherein 0.05 mm ≤ H2 ≤ 0.3 mm.

4. A welding tooling, wherein the welding tooling is configured to stack and weld a plurality of electrode tab units into the electrode tab structure of any one of claims 1 to 3, a first end face of the electrode tab structure is configured to be abutted against a welding head, and a second end face of the electrode tab structure is configured to be abutted against a welding platform.

5. The welding tooling of claim 4, wherein the welding tooling comprises:
a welding head with welding teeth, configured to be connected to the first end face of the electrode tab structure; and
a welding platform, configured to be connected to the second end face of the electrode tab structure;
wherein the welding teeth are of a flat tooth structure.

6. The welding tooling of claim 5, wherein a surface roughness of the welding teeth is Sa, and 10 µm ≤ Sa ≤ 85 µm.

7. The welding tooling of claim 5, wherein a height of the welding teeth in a first direction is H3, and H3 ≤ 100 µm.

8. The welding tooling of claim 5, wherein an area of the welding head is S1, an area of the welding teeth is S2, and 60 % ≤ S2 : S1 ≤ 90 %.

9. The welding tooling of any one of claims 5 to 8, wherein 15 mm² ≤ S2 ≤ 600 mm².

10. The welding tooling of any one of claims 5 to 8, wherein 24 mm² ≤ S1 ≤ 780 mm².
